# EUROPEAN PATENT APPLICATION

(11) **EP 2 088 520 A1**
(43) Date of publication of application: **12.08.2009**
(21) Application number: 08007278.8
(22) Date of filing: 14.04.2008
(51) Int. Cl.: G06F 17/30

(54) **Context based filter method and apparatus**

(30) Priority: 11.02.2008 US 29214
(71) Applicant: Avaya Inc., Basking Ridge, New Jersey 07920 (US)
(72) Inventor: Mohler, David S., Arvada, Colorado 80005 (US); Michaelis, Paul Roller, Louisville, Colorado 80027 (US)
(74) Representative: Walkenhorst, Andreas

(57) **Abstract**

A context sensitive filter method and apparatus is provided. In particular, information regarding the context in which a request for content is made is gathered, and is used to select filter parameters for application to content returned in response to the request. Context information can include information from a calendar application, location information, user preferences or other inputs.

## Description

### FIELD

The present invention relates to the filtering of information pushed to a communication device. More particularly, the invention relates to applying filtration rules based on the context in which a request for content is made.

### BACKGROUND

Communication devices are capable of delivering a wide range of content to a user. For example, email provides a means by which communications can be sent great distances at essentially zero cost to an essentially unlimited number of recipients. As another example, the Internet allows users to search for and access information, including information presented in multiple media formats, using browser applications. One result of the widespread use of these systems for delivering and accessing content has been an excess of unwanted content. For instance, the availability of email communications has lead to the inundation of email addresses with unwanted advertisements and offers (known as SPAM), and has provided an avenue for con artists and scammers to victimize the unwary. Sorting through large amounts of unwanted content for important or desired content has also become a problem.

With respect to email systems, various mechanisms have been developed to limit the delivery of unwanted messages to recipients. For example, SPAM filters allow unwanted messages to be intercepted before those messages reach mailboxes that are intended for desired communications. These SPAM filters typically operate by blocking messages from particular senders, and by blocking messages that contain specific terms. In addition, many SPAM filters can be trained so that over time they more accurately identify messages that a particular user does not wish to receive, with the ultimate goal of nearly eliminating or at least greatly reducing the number of unwanted messages that reach the user's "non-junk" mailboxes.

With respect to Internet browsers, users can encounter unwanted content even at sites from which other content is desired. For example, web pages often are collections of different windows that can present different content or streams of content. In addition, "pop-ups" can be pushed to the user's communication device in association with access to an otherwise desired page or collection of content. This can create problems, for example where the user is accessing the content through a bandwidth and/or processing limited device, because significant amounts of time can be wasted waiting for unwanted content to load and be displayed or otherwise presented to a user. The problems caused by pop-ups have been addressed by pop-up blockers, which operate by prohibiting the delivery of all pop-ups, or all pop-ups from an identified source, from being displayed by a user's communication device. However, such systems are inflexible. In addition, except for an option that is sometimes provided on web sites to access a simplified version or presentation of content, there have been no solutions available for blocking certain content within a web site from being processed and displayed by a browser or blocking all content except for some very limited content that the user has indicated interest in allowing through to their browser.

### SUMMARY

Embodiments of the present invention are directed to solving these and other problems and disadvantages of the prior art. In accordance with embodiments of the present invention, a context dependent content filter is provided to filter out potentially unwanted or disruptive code, such as screen pops, pop-ups or similar unrequested content. In accordance with other embodiments, the content filter is time and/or location dependent, and can apply or alter filter parameters dynamically in response to one or more inputs. Accordingly, the filter applies rules in the form of filter parameters and associated values that can be enabled, disabled, modified, or re-enabled (*i.e.,* returned to the default condition) by automatic context sensitive processes. The filter operates on content that is pushed to a user communication device. More particularly, the filter allows or disallows content associated with a request for content by a user to be presented to the user based on filter parameters that address the context in which the request for content is made.

In accordance with embodiments of the present invention, filter parameters are applied or not by a user device based on inputs received from sources of user related information, which define the context of the request. Examples of sources of user related information include electronic calendars, geographic location, current time of day, current date, recent browser history and user entered parameters, browser searches, keywords or other selections. The content information supplied by such sources provides a mechanism by which a user's interest in particular items of content can be inferred. In addition, a user can explicitly indicate an interest in certain items of content by providing input to the content filter, either directly or through another application. As the implied or explicit context in which a user requests content changes, the filter parameters and associated filter parameter values are also changed. Accordingly, the items of content delivered to the user can be tailored to the needs and desires of the user when the request is made. The filter parameters applied by the user device are not provided to the supplier of the content, preserving the privacy of the user as to the user's particular interests. Accordingly, the supplier of the content cannot determine the interest of the user or the filtration being applied. The selection and application of particular filter parameters can be inferred from information obtained from sources of user related information.

Embodiments of the present invention include a filter application operating as an adjunct to a browser. Both the client filter application and the browser run in a user device. The user operates the browser to request content, and the filter operates to selectively allow or disallow the presentation of particular items of content to the user. Other programs such as an e-mail clients, URLs and/or keywords embedded in text editing, spreadsheet or presentation applications may also be used to provide context of the user's interest.

Additional features and advantages of embodiments of the invention will become more readily apparent from the following discussion, particularly when taken together with the accompanying drawings.

### BRIEF DESCRIPTION OF THE DRAWINGS

**Fig. 1** is a block diagram depicting components of a system in accordance with embodiments of the present invention;
**Fig. 2** depicts a communication system in accordance with embodiments of the present invention in an example communication scenario;
**Fig. 3** depicts components of a communication device in accordance with embodiments of the present invention;
**Fig. 4** is a functional block diagram depicting aspects of context sensitive filtering of content in accordance with embodiments of the present invention; and
**Fig. 5** depicts aspects of the operation of a system in accordance with embodiments of the present invention.

### DETAILED DESCRIPTION

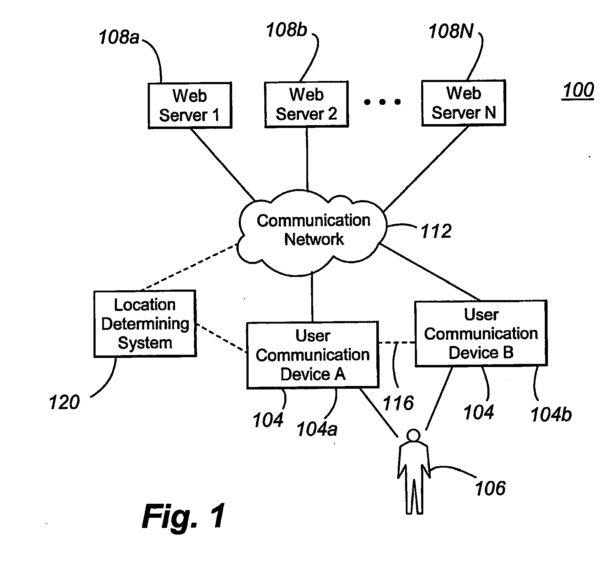

**Fig. 1** depicts components of a system 100 in accordance with embodiments of the present invention. In general, the system 100 includes one or more user communication devices 104 interconnected to one or more sources of content, such as web servers 108, via a communication network or networks 112. In addition, where there are multiple user communication devices 104a and 104b, those devices 104a and 104b can be in communication with one another directly, via direct link 116, or via the communication network 112. Embodiments of the present invention can also include one or more location determining systems 120, operable to provide information regarding to location of a user communication device 104.

A user communication device 104 may comprise a device capable of receiving or generating a request for content at the direction of a user 106, and for displaying or otherwise presenting content to the user 106. Examples of user communication devices 104 therefore include a desktop or portable personal computer, a personal digital assistant (PDA), or a smart phone. Although two user communication devices 104a and 104b are shown in **Fig. 1**, it should be appreciated that embodiments of the present invention are not limited to any particular number. For example, a system 100 may include a single user communication device 104, or more than two user communication devices 104.

The communication network 112 may comprise one or more networks of one or more types. For example, the communication network 112 may comprise a packet data network, such as the Internet, a private intranet, virtual private network (VPN) or a combination of one or more such networks. As additional examples, the communication network 112 may comprise a switched circuit network, such as the public switched telephony network (PSTN), a private switched network, or wireless voice and/or data networks, such as cellular telephone networks or networks supporting wireless data communications. In addition, the communication network 112 may combine several network types in providing a path for communications. A user request for content is delivered to a source of content 108 via the communication network 112. In response to the request for content, the content source 108 returns one or more pages of content to the user communication device 104. Accordingly, the source of content 108 can comprise and is referred to herein as a web server 108. As can be appreciated by one of skill in the art, a plurality of web servers 108a to 108N may be accessed by a user communication device 104 via a communication network 112. Moreover, although a particular request for content is typically handled by a single web server 108, a particular request for content or set of requests for content may be fulfilled by multiple web servers 108. Moreover, a web server 108 may be implemented using a plurality of devices, as can be appreciated by one of skill in the art. Moreover, returned content can include that specifically requested as well as additional unrequested information that the web servers 108 provide. Examples of such unrequested content may include pop up advertisements, additional browser screen launches and the like. Other examples of unrequested content include content that is substantively or topically not of interest to the user 104.

A system 100 in accordance with embodiments of the present invention may also be associated with or include a location determining system 120. In general, a location determining system 120 operates to provide context information in the form of the location of a user communication device 104 from which a request for content has been made. Accordingly, the location of a user communication device 104 may provide context information, as described in greater detail elsewhere herein. Examples of a location determining system 120 include the global positioning system (GPS), in which a constellation of satellites in Earth orbit provide information to a receiver associated with a user communication device 104 from which the location of the user communication device 104 can be derived, or short range systems, such as radio frequency identification (RFID) systems. Other location information providing a variety of granularities can be provided with WiFi access, wireless triangulation, cell registration, card readers, kiosk access and other factors that may help to determine the location of the user. Such presence information within an overall context is known as geofencing. Embodiments of the present invention may therefore make use of systems that provide an absolute location of the user communication device 104. Alternatively or in addition, embodiments of the present invention may make use of geofencing in order to determine a relative location of a user communication device 104. Yet another example of a system that can be used to provide location information includes information available from a wireless communication network, through which the user communication device 104 is connected to other devices.

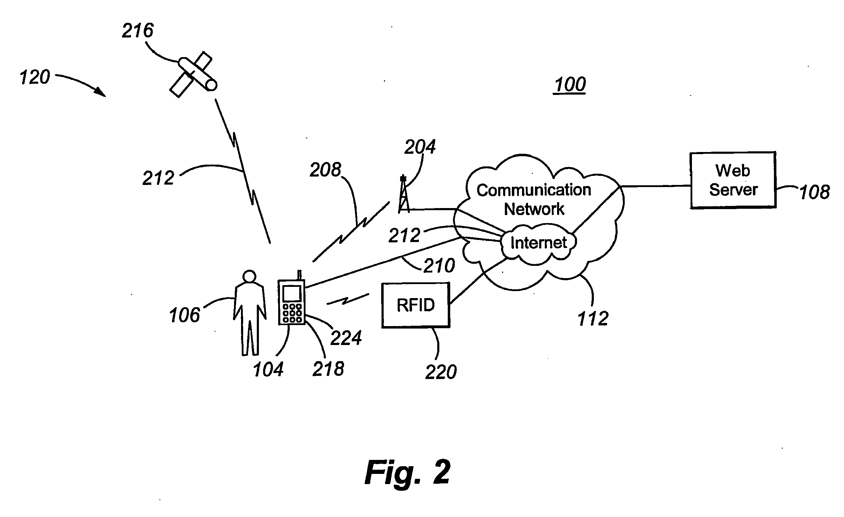

**Fig. 2** illustrates an instance of a system 100 in accordance with embodiments of the present invention in connection with an example communication scenario. In particular, a user 106 carrying a portable communication device 104 can make requests for content to a source of content comprising a web server 108 via a communication network 112. As illustrated, the communication network 112 in this example scenario includes a wireless communication network 204 that establishes a wireless communication channel 208 with the user communication device 104. The communication network 112 may also include the public Internet 212 for at least a portion of the communication link extending between the wireless communication network 204 and the web server 108. Alternatively or in addition, a wired connection 210 may be established between a mode of the communication network 112.

In addition, location information in the depicted scenario is available to the user communication device 104. This location information may be provided by a global positioning system (GPS) location determining system 120 in the form of GPS data 212 transmitted by the constellation of GPS satellites 216. Accordingly, the user communication device 104 may include a GPS receiver 218 that uses the transmitted signals 212 to determine the current location of the user communication device 104.

As another example, the system 100 may include a location determining system 120 comprising a radio frequency identification device 220 that operates in cooperation with a complimentary radio frequency identification device 224 provided as part of or in association with the user communication device 104. In general, an RFID device 220 can provide information regarding the location of a complimentary device 224 when the RFID device 220 and the complimentary device 224 are within a certain range of one another, and a location of one of the devices is known. As can be appreciated by one of skill in the art, in an RFID location determining system 120, a first one of the devices 220 or 224 comprises an active device and a second one of the devices 220 or 224 comprises a passive device. Moreover, one of the devices 220 or 224 has a known location. In accordance with embodiments of the present invention, location information obtained by a location determining system 120 is provided to the user communication device 104 for use in connection with providing a context for determining filter parameters and/or filter parameter values to be applied to content received from the web server 108.

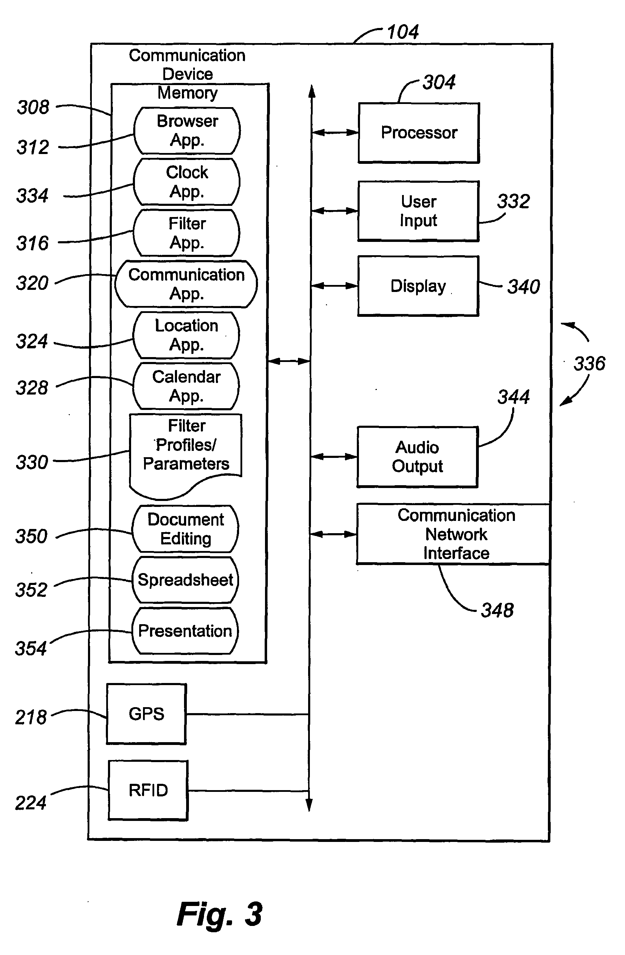

**Fig. 3** illustrates components of a user communication device 104 in accordance with embodiments of the present invention. The components may include a processor 304 capable of executing program instructions or software. Accordingly, the processor 304 may include any general purpose programmable processor or controller for executing application programming or instructions. As a further example, the processor 304 may comprise a specially configured application specific integrated circuit (ASIC). The processor 304 generally functions to run programming code or instructions implementing various of the functions performed by the user communication device 104. As will be described in greater detail herein, such functions may include communications, web browsing, filtering, location determining, and calendaring functions.

A user communication device 104 may additionally include memory 308 for use in connection with the execution of programming by the processor 304, and for the temporary or long-term storage of program instructions or data. Examples of application programming or instructions that can be stored in memory 308 include a web browser application 312, a filter application 316 incorporating features for dynamically adjusting filter parameters in response to changes in context in accordance with embodiments of the present invention, a communication application 320, such as a telephony application or instant messaging application, a location determining application 324, a calendar application 328, and a clock application 334, a document editing tool 350, a spreadsheet tool 352 and a presentation tool 354. Various of these applications such as the communication 320, location determining 324, calendar 328, clock 334, document editing 350, spreadsheet 352 and presentation 382 applications, are examples of applications that can provide, alone or in combination, the user's preferred context. An example of data that can be stored in memory is a set of filter profiles and/or filter parameter and value information 330. As depicted herein, the user's preferred context is applied by the filter application 316 to select appropriate filter profiles and for filter parameter and value information 330 for use in connection with filtering items of content.

As can be appreciated by one of skill in the art, a browser application 312 may enable the user 106 of a user communication device 104 to make requests for content and may operate to display or otherwise present content pushed to the user communication device 104 in response to such a request. Moreover, the browser application 312 can provide a means for requesting and displaying content to a user. As can also be appreciated by one of skill in the art, content returned in response to a request can include a plurality of items, and can include items of different types or categories. For example, content can be in the form of text, images, audio, or video. Moreover, such content can include items that are pushed to the browser application 312 by a web server 108 that are not specifically requested.

The filter application 316 is provided to filter from the items of content returned in response to a request those items that are undesired, either because they are not of interest to the user or because they are likely to be disruptive. For example, items of content that are directed to subject matter that is not of interest to the user 106 can be filtered. As a further example, items of content that would require significant processing or implicate output devices that the user 106 does not want to have activated, can be filtered. For example, audio files can be filtered for items of content while text files are presented to the user 106. Moreover, embodiments of the present invention provide a filter application 316 in which filter parameters can be dynamically determined based on inputs providing information regarding the context in which the request for content was made. Alternatively or in addition, the user 106 can select filter parameters for application to content, and can view and/or edit filters and filter parameters. The use of filters and filter parameters to perform content filtering may apply any filtering mechanism known in the art, including text and heuristic filtering mechanisms. The filter application 316 may generally provide a means for applying information regarding the context in which a request for content is made to select a filter parameter value and a means for applying a selected filter parameter to items of content received in a request.

A communication application 320 may generally facilitate communications by a user with other communication devices 104 or endpoints. Accordingly, an example of a communication application 320 includes a telephony application capable of supporting audio communications between the user communication device 104 and another endpoint, video telephony, or instant messaging. Moreover, a communication application 320 may be a central feature of the user communication device 104, such as where the user communication device 104 is a smart telephone and the communication application 320 is a telephony application. In accordance with other embodiments of the present invention, a communication application 320 need not be provided, or can be a feature that is not central to the communication device 104. For instance, the communication application 320 may comprise an instant messaging application running on a user communication device 104 comprising a personal computer.

An example of an application or module that can be included in a user communication device 104 in order to provide the filter application 316 with context information is a location application 324. The location application 324 may generally operate in association with a location determining system 120 to determine the location of the user communication device 104 and may provide a means for providing information regarding the context in which a request for content is made. An example of a location application 324 includes a global positioning system (GPS) application operating in cooperation with a GPS receiver 218 that receives GPS location data 212 from satellites 216, from which the location application 324 can determine the position of the communication device 104. Another example of a location application 324 is an application that operates an active radio frequency identification (RFID) device 224 in or associated with the user communication device 104, that can be used to detect and identify complimentary RFID devices 220 having a known location. In particular, as can be appreciated by one of skill in the art, the limited range of a typical RFID system can be used to advantage in connection with location determination, because the detection and identification of a particular complimentary RFID device having a known location can be taken as an indication that the user communication device 104 is within close (or known) proximity to the identified RFID device. As still another example, a location application 324 may comprise an application, such as a geofencing application, that receives data, for example via a communication application 320 that is provided from another device to indicate the location of the user communication device 104. Such an application 324 may be resident on device 104 or pushed to it by the owner of the particular geofence architecture of interest at the time. For example, a first user communication device 104a may receive data from a second, co-located user communication device 104b. As another example, a first user communication device 104a comprising a portable computer may receive a location signal from a second user communication device 104b comprising a GPS receiver 218 in communication with the first user communication device 104. As yet another example, location information can be provided by a network 112 that the user communication device 104 is in communication with.

Another example of an application that can provide context information to a filter application 316 is a calendar application 328. For example, a calendar application 328 comprising an electronic calendar in which the user 106 has entered information regarding scheduled activities, such as meetings and vacations, can be used to determine or select filter parameters and may provide a means for providing information regarding the context in which a request for content is made. For instance, by referencing a current date and time, which can be provided by a clock application 334 running on the user communication device 104, a determination can be made as to whether a particular entry in the calendar application 328 makes the modification or application of a particular filter parameter desirable or not.

Context information can also be provided to a filter application 316 by other common applications. For example, a document editing application 350, spreadsheet application 352 or presentation application 354 can all provide an indication of the user's preferred context to the filter application 316. For example, imbedded URLs, keywords and other information included in files operated on by such applications can provide context information that is used by the filter application to select filter parameters and filter parameter values.

A user communication device 104 may also include one or more user input devices 332. Examples of user input devices 332 include a keyboard, a pointing device combined with a display screen or other position encoder, a microphone and a numeric keypad. In addition, one or more output devices 336 may be provided. Examples of output devices 336 include a display 340 and audio output 344. In accordance with embodiments of the present invention, a user 106 can enter requests for content and/or filter parameter selections through one or more of the input devices 332. In addition, filtered content can be received, and/or active or available filter parameters and filter parameter values can be reviewed using one or more of the output devices 336.

A user communication device 104 generally also includes one or more communication network interfaces 348. For example, a packet data network interface, such as a wired or wireless Ethernet interface or cellular packet data interface may be provided, for instance to support Internet protocol communications. Additional examples of a communication network interface 348 include a telephony network interface or other wireless or wire line interfaces. In addition, in accordance with embodiments of the present invention, a user communication device 104 may include one or more communication network interfaces 348 that support the detection and use of location information signals, such as GPS signals 212 and RFID signals.

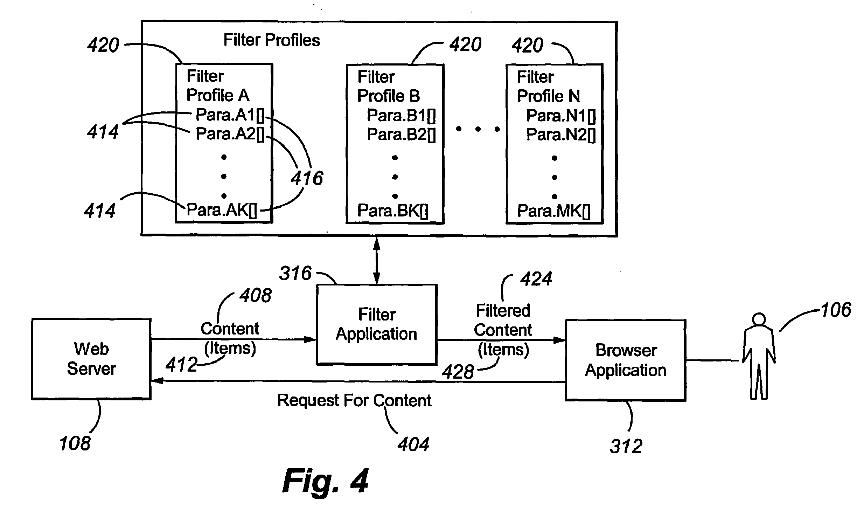

**Fig. 4** is a functional block diagram depicting aspects of the context sensitive filtering of content in accordance with embodiments of the present invention. In particular, a user 106 operates the browser application 312 running on the user communication device 104 to initiate a request for content 404. A request for content 404 is passed to a web server 108. The web server 108 responds by returning content 408. As can be appreciated by one of skill in the art, the content 408 returned by the web server 108 can include a plurality of items of content 412. Moreover, the items of content 412 are not necessarily desired by the user 106. For example, items 412 included in the returned content 408 may comprise advertisements presented in a separate browser window (*i.e.,* a pop-up). As still another example, the items 412 of returned content 408 may include multimedia files that require an appreciable amount of time to load and present to the user 106 and therefore are undesired, or that produce a type of output that is undesired, such as audio output. Accordingly, the content 408 is passed to the filter application 316, before any of the returned content 408 is provided to the browser application 312.

The filter application 316 generally operates to filter unwanted or undesired items 412 from the content 408 returned by the web server 108 in response to the request 404. More particularly, the filter application 316 applies one or more filter parameters 414. Each applied filter parameter 414 is generally associated with a parameter value 416. In accordance with embodiments of the present invention, the particular parameters 414 and/or parameter values 416 applied to items 412 of content 408 are selected based on the context in which the content 408 is received. Sets of filter parameters 414 and associated values 416 can be grouped in filter profiles 420. Filter profiles 420 provide a convenient way by which a user 106 or the filter application 316 can select an appropriate set of filter parameters 414 for a given context. Accordingly, different filter profiles 420 can contain different sets of filter parameters 414. Alternatively or in addition, different filter profiles 420 can include different filter parameter values 416 associated with the included filter parameters 414. In still another aspect of embodiments of the present invention, filter parameter values 416 may be dynamically adjusted according to an applicable context.

The filter application 316 applies the filter parameters 414 and associated filter parameter values 416 that are applicable to the context in which the content 408 is delivered to the user communication device 104. The remaining filtered content 424, which may include one or more items 428 of content comprising a subset of the items 412 of content 408 originally returned from the web server 108, to the browser application 312. The browser application 312 then presents the items of content 428 passed to it by the filter application 316 to the user 106. In accordance with embodiments of the present invention, a set of filter parameters 414 and associated parameter values 416, which may or may not be collected within a filter profile 420, persist until the context which caused that set of filter parameters 414 and values 416 to be selected changes. A change in context can be indicated by information provided by any application or other source of context information provided as an input to the filter application 316. Moreover, the user 106 can invoke or dismiss a filter parameter 414 or value 416, or filter profile 420. The user 106 can also toggle between a plurality of contexts (*i.e.,* filter parameters 414 and associated values 416) as the user's 106 interests (and therefore the context in which a request for content 404 is made) change.

In accordance with embodiments of the present invention, the filter application 316 applies filter parameters 414 and associated filter parameter values 416 using any of a number of text and heuristic filtering mechanisms known to those of skill in the art. Such mechanisms can include keyword searching, for example to identify terms or phrases indicating that a particular item of content 412 is undesired or should be considered disruptive. Filtering may also operate by identifying the descriptive text tags indicating the type of content that an item 412 comprises, such as an image, audio file, video file or text, to allow filtering based on type.

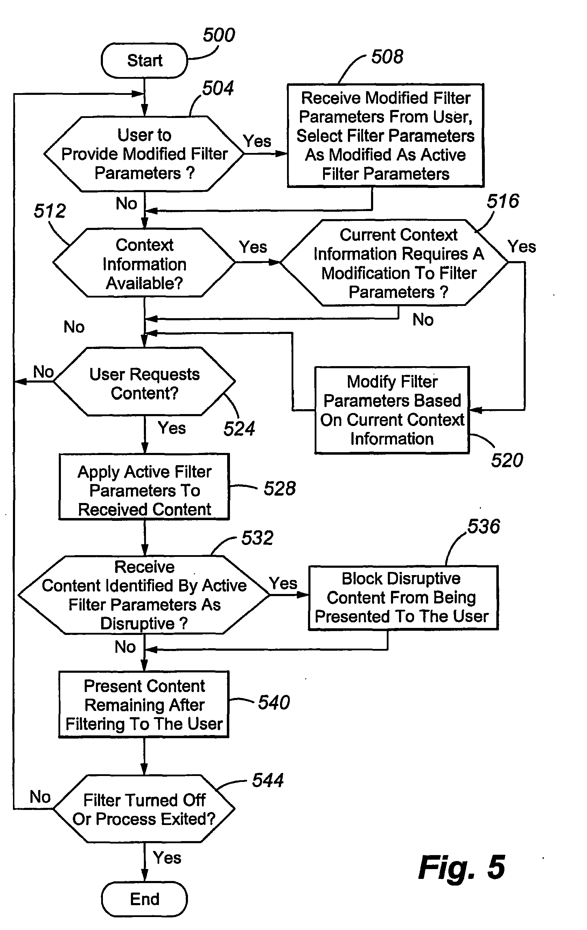

With reference now to Fig. 5, aspects of the operation of a system 100 incorporating a user communication device 104 running a filter application 316 implementing a context sensitive filter function in accordance with embodiments of the present invention are illustrated. After initializing and starting the system 500, a determination may be made as to whether the user 106 has provided modified or initial filter parameters 412 for application to content 408 returned in response to a request 504. In particular, embodiments of the present invention allow a user 106 to specify filter parameters 412 and/or associated values 416 that are applied by the filter application 316, in order to control content that is presented 424 to the user 106 in response to request for content 404. As another example, a user 106 may specify filter parameters by selecting a particular filter profile. For example, a user 106 may choose to block all pop-ups. As yet another example, a user 106 may edit or modify pre-provisioned or existing filter profiles 420, or an active filter profile 420. As used herein, it should be understood that modifications to a filter parameter 414 can refer to determining whether a particular parameter 414 is applied and/or changes to the filter parameter value 416 associated with a filter parameter. Moreover, it should be understood that a filter parameter value 416 may comprise an indication as to whether the associated filter parameter 414 is to be applied or not. If the user 106 provides modified or default filter parameters 414, the user modified or determined filter parameters 414 are selected as the active filter parameters (step 508). In addition, filter parameters 414 and associated filter parameter values 416 may be selected by selecting a particular filter profile 420. Moreover, if the user 106 does not specify filter parameters 414, a default set of filter parameters 414 and associated values 416 may be applied. As used herein, a default set of filter parameters 414 may comprise a set of filter parameters 414 that were applied in connection with the last use of the filter application 316. Accordingly, selected filter parameters 414 may persist until a new selection is made. After selecting the user modified or supplied filter parameters 414, or selecting default filter parameters 414 without modification by the user, a determination is made as to whether context information is available to the filter application 316 (step 512). Context information can include any information available to the filter application 316 that can be used in connection with determining or selecting filter parameters 414 that are applied to content delivered to the user communication device 104.

If context information is available, a determination is made as to whether the current context information requires a modification to the applicable filter parameters 414 and/or values 416 (step 516). If the current context information requires a modification to the applicable filter parameters 412 and/or values 416, the filter parameters 412 and/or values 416 are modified based on that current context information (step 520). Modifying the applicable filter parameters 414 and/or values 416 can include modifying filter parameters 414 and/or values 416 from those selected as a result of previously applicable context information being supplanted by currently applicable context information.

After determining that no context information is available, that available context information does not require a modification to filter parameters 414 and/or values 416, or modifying filter parameters 414 and/or values 416 based on current context information, a determination is made as to whether the user 106 has requested content (step 524). Accordingly, the filter application 316 may operate as an adjunct to or in association with the browser application 312, and a request for content by a user 106 may comprise the entry of an Internet address to direct the browser application 312 to obtain content from that address. If the user 106 has not requested content, the process may return to step 404, to allow applicable filter parameters 414 and/or values 416 to be updated as user selections and/or the applicable context for any requests that might be made change.

If the user has entered a request for content, the active filter parameters 414 are applied to content received in response to that request (step 528). In general, application of the active filter parameters 414 can include filtering items 412 included in content 408 returned from a web server 108 to remove those items 412 identified as disruptive. As used herein, an item 412 of content 408 is deemed to be disruptive if it is undesired in the applicable context for the request for content 404.

Accordingly, at step 532, a determination is made as to whether content identified by the active filter parameters 414 and values 416 as disruptive has been received. If content identified as disruptive has been received, that content is blocked from being presented to the user (step 536). After blocking disruptive items of content, or determining that no item of content 412 has been identified as disruptive, the items of content 428 remaining after filtering are presented to the user (step 540). A determination may next be made as to whether the filter application 316 has been turned off or the process for filtering has been exited (step 544). If the filter 316 has not been turned off and the process has not been exited, the process may return to step 404. Alternatively, the process may end. The following examples are provided for purposes of illustration only, and are not intended to limit the scope of the claimed invention.

### Example 1

As an illustrative example, and without necessarily limiting the claims, a first context in which a user 106 is at their office may implicate the application of a filter parameter 414 and value 416 that removes audio and audio/visual items 412, since the delivery of audio output to the user 106 in that user's work environment would be considered disruptive. Continuing this example, in a second context, in which the user is at home a filter parameter 414 that operates to remove audio and audio/visual content would not be applied, because in that context such items 414 of content 408 may be desired and would not be disruptive. According to this example, the context in which the request for content 404 is made is provided by the calendar application 328 with reference to the clock application 344, indicating whether or not the request for content 404 is made during normal business hours on a work day.

### Example 2

In this example, the same filter parameters (*i.e.,* filtering audio and multimedia items 414 of content 408 or not) as in the first example are applied. However, in this second example the context for the request for content 404 is provided by a location application 324. In particular, the location application 324 can provide location information indicating that the user communication device 104 is at the office of the user 106 when the request for content 404 is made.

### Example 3

According to this example, the context for a request for content 404 is provided by the calendar application 328, with reference to the clock application 334. More particularly, the user 106 may have an entry in the calendar application 328 indicating that the user will be taking a vacation to Canada in the near future. Moreover, a predefined "l'm interested in fishing gear" filter profile 420 can be enabled through manual selection by the user 106, or automatically enabled if the user 106 is detected to be in a sporting goods store, for example as indicated by information from the location application 324. Within this context, a request for content 404 made to a web server 108 operated by a sporting goods supplier that returns content 408 can be filtered so that items 412 related to tropical fishing equipment are suppressed, while items 412 related to fly fishing are allowed to pass as filtered items 428 to the browser application 312.

As can be appreciated by one of skill in the art, a filter application 316 in accordance with embodiments of the present invention may apply filter parameters 414 and associated filter parameter values 416 to items of content 404 based on various features of the items of content 404. For example, a filter parameter 414 may be associated with a value 416 activating that filter parameter 414, so as to block all items of content 412 comprising content of a particular type. For instance, all .wav files and other audio files could be blocked to prevent the presentation of audio output to the user 106. As a further example, a filter parameter 414 may be associated with a filter parameter value 416 specifying a word, words or phrases to search for and to block content including those values 416. For instance, in connection with the example given above related to fishing gear, items of content 412 containing the terms "tropical", "bonefish" and "shark" could be filtered so that it is prevented from being processed by the browser application 312 and presented to the user 106.

The foregoing discussion of the invention has been presented for purposes of illustration and description. Further, the description is not intended to limit the invention to the form disclosed herein. Consequently, variations and modifications commensurate with the above teachings, within the skill or knowledge of the relevant art, are within the scope of the present invention. The embodiments described hereinabove are further intended to explain the best mode presently known of practicing the invention and to enable others skilled in the art to utilize the invention in such or in other embodiments and with various modifications required by the particular application or use of the invention. It is intended that the appended claims be construed to include alternative embodiments to the extent permitted by the prior art.

## Claims

1. A method for filtering content, comprising:
issuing a first request for content; in response to the first request for content, receiving a first plurality of items of content;
determining by a filter application a context applicable to the first request for content, wherein a first context is determined to be applicable to the first request for content;
in response to determining that the first context is applicable to the first request for content, the filter application selecting a first filter parameter and a first filter parameter value;
after selecting the first filter parameter and the first filter parameter value, applying by the filter application the first filter parameter and the first filter parameter value to each item of content included in the first plurality of items of content;
as a result of applying the first filter parameter and the first filter parameter value to each of the first plurality of items of content, preventing a first item of content included in the first plurality of items of content from being presented to a user.

2. The method of Claim 1, further comprising:
presenting a second item of content included in the first plurality of items of content to the user.

3. The method of any one of Claims 1 and 2, further comprising:
issuing a second request for content;
determining a context applicable to the second request for content, wherein a second context is determined to apply to the second request for content;
in response to determining the context applicable to the second request for content, selecting at least one of the first filter parameter and a second filter parameter and a second filter parameter value; in response to the second request for content, receiving a second plurality of items of content;
after selecting the at least one of the first filter parameter and the second filter parameter and the second filter parameter value, applying by the filter application the at least one of the first filter parameter and the second filter parameter and the second filter parameter value to each item of content included in the second plurality of items of content, wherein the first filter parameter is related to content of a first type, wherein the first filter parameter value specifies whether or not content of the first type is blocked.

4. The method of Claim 3, wherein the second plurality of items of content include at least first and second items of content, the method further comprising:
as a result of applying the at least one of the first filter parameter and the second filter parameter and the second filter parameter value to each of the second plurality of items of content, preventing the second item of content included in the second plurality of items of content from being presented to the user.

5. The method of any one of Claims 3 and 4, wherein the first filter parameter and the second filter parameter value are selected, and wherein the second item of content included in the first plurality of items of content and the second item of content included in the second plurality of items of content belong to a first category of content.

6. The method of any one of Claims 1 to 5, further comprising:
providing information specifying a location of a user communication device to the filter application,
wherein the first request for content is issued from the first user communication device while the user is at the specified location, wherein the first context is determined with reference to the specified location.

7. The method of any one of Claims 3 to 6, further comprising:
providing information specifying a location of a first user communication device to the filter application, wherein the first request for content is issued from the first user communication device while the first user communication device is at a first location, wherein the second request for content is issued from the first user communication device while the first user communication device is at a second location,wherein the first context is determined to be applicable to the first request for content and the second context is determined to be applicable to the second request for content as a result of the issuance of the first and
second requests for content from the first and second locations respectively.

8. The method of any one of Claims 1 to 7, further comprising:
providing information disclosing a future event that the user is scheduled to participate in to the filter application, wherein the first context is determined with reference to the scheduled future event.

9. The method of any one of Claims 1 to 8, wherein selecting for a first filter parameter a first filter parameter value comprises changing the first filter parameter value, wherein the first context applicable to the request for content includes at least one of a calendar entry made in a user calendar and a current date, and
wherein the first context applicable to the request for content includes recent browsing history.

10. The method of any one of Claims 1 to 9, further comprising:
displaying content to the user in a first browser window using a browser application, wherein the request for content is issued using the browser application displayed in the first window, wherein presenting the second item of content includes displaying the second item of content in the first browser window, and
wherein the first item of content includes or implies an instruction to open a second browser window.

11. The method of any one of Claims 1 to 10, wherein the first item of content includes a pop-up, and wherein preventing a first item of content included in the plurality of items of content from being presented includes not loading the first item of content by a browser application.

12. The method of any one of Claims 1 to 11, further comprising:
after selecting the first filter parameter and the first filter parameter value, receiving a selection by a user of a second filter parameter and a second filter parameter value, wherein selecting a first filter parameter value includes modifying one of a first user selected filter profile, a default filter profile, or a previously selected filter profile.

13. A system for selectively filtering content based on context, comprising:
means for requesting and displaying content to a user;
means for providing information regarding the context in which a request for content is made; means for applying information regarding the context in which a request for content is made to select a filter parameter value;
means for applying a selected filter parameter value to items of content received in response to a request, wherein at least a first one of the items of content is prevented from being presented to a user by application of the selected filter parameter value.

14. The system of Claim 13, wherein the means for providing information regarding the context in which a request for content is made include one of a user calendar application, a user document editing application, a user spreadsheet application, a user presentation application, and a location determining system.

15. A computer readable storage medium encoded to perform instructions for implementing the method of any one of Claims 1-12.
